# EUROPEAN PATENT APPLICATION

(11) **EP 4 629 406 A1**
(43) Date of publication of application: **08.10.2025**
(21) Application number: 23897547.8
(22) Date of filing: 17.11.2023
(51) Int. Cl.: H01M 50/107, H01M 50/145, H01M 50/152, H01M 50/167, H01M 50/184, H01M 50/186

(54) **CYLINDRICAL BATTERY**

(30) Priority: 30.11.2022 JP 2022191154
(71) Applicant: Panasonic Energy Co., Ltd., Osaka 570-8511 (JP)
(72) Inventor: FURUTA, Yohei, Kadoma-shi, Osaka 571-0057 (JP)
(74) Representative: Eisenführ Speiser
(86) International application number: PCT/JP2023/041427
(87) International publication number: WO 2024/116896

(57) **Abstract**

A cylindrical battery (10) includes an electrode body, an electrolytic solution, a bottomed cylindrical outer can (16) that accommodates the electrode body and the electrolytic solution, and a sealing body (17) that is caulked and fixed in the opening of the outer can (16) through a gasket (28). The outer can (16) has an annular projection (46) that contacts the gasket (28) on the inner surface of a side wall (30) in a range on the inner side with respect to a tip (48). The formation of this protrusion (46) can effectively block the outward movement path of the electrolytic solution.

## Description

### TECHNICAL FIELD

The present disclosure relates to a cylindrical battery.

### BACKGROUND ART

There is conventionally a cylindrical battery as disclosed in Patent Literature 1. The cylindrical battery comprises an electrode assembly, an electrolyte solution, and a bottomed cylindrical outer can that houses the electrode assembly and the electrolyte solution. The cylindrical battery ensures airtightness inside the battery by compressing a gasket when a sealing assembly is caulked and fixed to an opening portion of the outer can through the gasket.

### CITATION LIST

### PATENT LITERATURE

PATENT LITERATURE 1: Japanese Unexamined Patent Application Publication No. 2021-150243

### SUMMARY

Even when the gasket is compressed and a gap between the outer can and the sealing assembly is sealed, the inside electrolyte solution may move between the outer can and the gasket, causing liquid leakage and generation of rust on the outer can. Accordingly, it is an advantage of the present disclosure to provide a cylindrical battery capable of suppressing liquid leakage and generation of rust on the outer can by blocking a moving path of the electrolyte solution between the outer can and the gasket.

In order to solve the above problem, a cylindrical battery according to the present disclosure comprises: an electrode assembly; an electrolyte solution; a bottomed cylindrical outer can that houses the electrode assembly and the electrolyte solution; and a sealing assembly that is caulked and fixed to an opening portion of the outer can through a gasket, in which when an area of an inner surface of a side wall portion of the outer can excluding the bottom portion on a side of the bottom portion is defined as an inner side, the outer can includes an annular protrusion in contact with the gasket in a range on the inner side relative to a distal end of the inner surface of the side wall portion on a side of an opening portion.

According to the cylindrical battery of the present disclosure, a moving path of the electrolyte solution between the gaskets of the outer can is blocked, which makes it possible to suppress liquid leakage and the rust on the outer can.

### BRIEF DESCRIPTION OF DRAWING

FIG. 1 is an axial sectional view of a cylindrical battery according to an embodiment.
FIG. 2 is a perspective view of an electrode assembly.
FIG. 3 is an expanded sectional view in the vicinity of a shoulder portion in FIG. 1.
FIG. 4 is an expanded sectional view in the vicinity of a sealing assembly in FIG. 1.
FIG. 5 is an explanatory view about one example of a formation method of an annular protrusion.
FIG. 6 is an expanded sectional view of a cylindrical battery of a first modification corresponding to FIG. 3.
FIG. 7 is an expanded sectional view of a cylindrical battery of a second modification corresponding to FIG. 3.
FIG. 8 is an expanded sectional view of a cylindrical battery of a third modification corresponding to FIG. 3.

### DESCRIPTION OF EMBODIMENTS

Hereinafter, an embodiment of a cylindrical battery according to the present disclosure will be described in detail with reference to the drawings. Here, the cylindrical battery of the present disclosure may be a primary battery or a secondary battery. The cylindrical battery may be a battery using an aqueous electrolyte or a battery using a non-aqueous electrolyte. As a cylindrical battery 10 as one embodiment, a non-aqueous electrolyte secondary battery (lithium-ion battery) using a non-aqueous electrolyte is illustrated below, though the cylindrical battery of the present disclosure is not limited thereto.

It is assumed from the beginning that a new embodiment is constructed by appropriately combining characteristic portions of the embodiment or modifications as will be described below. In the embodiment below, like component members are designated by like reference signs in the drawings to omit redundant explanation. The plurality of drawings also includes schematic drawings, and throughout the different drawings, dimensional ratios, such as length, width, and height, of each member do not necessarily match. In this specification, the side of a sealing assembly 17 in an axial direction (height direction) is defined as "upper side", and the side of a bottom portion 68 of an outer can 16 in the axial direction is defined as "lower side" in the cylindrical battery 10. Moreover, among the component members described below, those not included in an independent claim representing the highest-level concept are optional component members and are not essential component members.

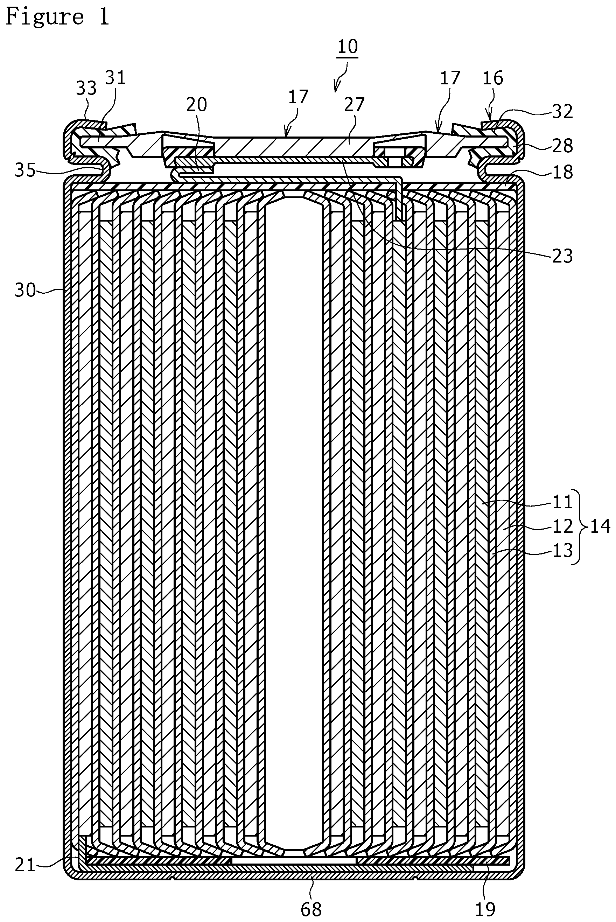

FIG. 1 is an axial sectional view of the cylindrical battery 10 according to one embodiment of the present disclosure. As shown in FIG. 1, the cylindrical battery 10 comprises a winding type electrode assembly 14, a non-aqueous electrolyte (non-aqueous electrolyte solution) (not shown), a bottomed cylindrical outer can 16 that houses the electrode assembly 14 and the non-aqueous electrolyte, and the sealing assembly 17 that seals an opening portion of the outer can 16. The electrode assembly 14 includes a positive electrode 11, a negative electrode 12, and separators 13 interposed between the positive electrode 11 and the negative electrode 12. The cylindrical battery 10 further comprises a resin gasket 28 arranged between the outer can 16 and the sealing assembly 17.

The non-aqueous electrolyte contains a non-aqueous solvent and an electrolyte salt dissolved in the non-aqueous solvent. As the non-aqueous solvent, there may be used, for example, esters, ethers, nitriles, amides, and a mixed solvent of two or more of the group consisting of esters, ethers, nitriles, and amides, or the like. The non-aqueous solvent may contain halogen substituted products in which at least some of hydrogen atoms in the solvent are substituted with halogen atoms such as fluorine. The non-aqueous electrolyte is not limited to liquid electrolyte, and may be solid electrolyte using gel like polymers or the like. As the electrolyte salt, lithium salt such as LiPF₆ is used.

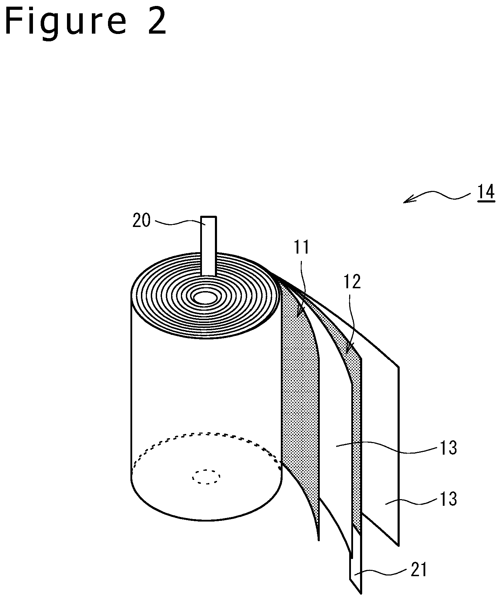

FIG. 2 is a perspective view of the electrode assembly 14. As shown in FIG. 2, the electrode assembly 14 includes a long positive electrode 11, a long negative electrode 12, and two long separators 13, and has a winding structure in which the positive electrode 11 and the negative electrode 12 are wound with the separators 13 interposed therebetween. The positive electrode 11 is joined to a positive electrode lead 20, and the negative electrode 12 is joined to a negative electrode lead 21. In order to prevent lithium deposition, the negative electrode 12 is formed with a dimension that is slightly larger than the positive electrode 11 so as to be longer than the positive electrode 11 in a longitudinal direction and a width direction (short side direction). The two separators 13 are also formed with a dimension that is at least slightly larger than the positive electrode 11 and are arranged, for example, to hold the positive electrode 11 therebetween.

The positive electrode 11 includes a positive electrode current collector and a positive electrode mixture layer formed on both the surfaces of the positive electrode current collector. As the positive electrode current collector, there may be used a foil made of metal that is stable in a potential range of the positive electrode 11, such as aluminum and aluminum alloy, a film with the metal arranged on its surface layer, or the like. The positive electrode mixture layer contains a positive electrode active material, a conductive agent, and a binding agent. The positive electrode 11 can be fabricated by, for example, coating the positive electrode current collector with positive electrode mixture slurry containing a positive electrode active material, a conductive agent, a binding agent, or the like, drying the coating, and then compressing the coating to form a positive electrode mixture layer on both the surfaces of the positive electrode current collector.

The positive electrode active material is constituted with lithium-containing metal composite oxide as a main component. Examples of metal elements contained in the lithium-containing metal composite oxide may include Ni, Co, Mn, Al, B, Mg, Ti, V, Cr, Fe, Cu, Zn, Ga, Sr, Zr, Nb, In, Sn, Ta, and W. A preferable example of the lithium-containing metal composite oxide is a composite oxide containing at least one of the group consisting of Ni, Co, Mn, and Al.

Examples of the conductive agent contained in the positive electrode mixture layer may include carbon materials such as carbon black, acetylene black, ketjen black, and graphite. Examples of the binding agent contained in the positive electrode mixture layer may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salt, polyethylene oxide (PEO), or the like.

The negative electrode 12 includes a negative electrode current collector and a negative electrode mixture layer formed on both the surfaces of the negative electrode current collector. As the negative electrode current collector, there may be used a foil made of metal that is stable in a potential range of the negative electrode 12, such as copper and copper alloy, a film with the metal arranged on its surface layer, or the like. The negative electrode mixture layer contains a negative electrode active material and a binding agent. The negative electrode 12 can be fabricated by, for example, coating the negative electrode current collector with negative electrode mixture slurry containing a negative electrode active material, a binding agent, or the like, drying the coating, and then compressing the coating to form a negative electrode mixture layer on both the surfaces of the negative electrode current collector.

As the negative electrode active material, a carbon material that reversibly occludes and releases lithium ions is typically used. Preferable carbon material is graphite such as natural graphite such as flake graphite, massive graphite, and earthy graphite, and artificial graphite such as massive artificial graphite, and graphitized mesophase carbon microbeads. The negative electrode mixture layer may contain a silicon (Si) material containing Si as the negative electrode active material. As the negative electrode active material, there may be used metal, other than Si, that alloys with lithium, or alloy containing the metal, and compounds containing the metal, or the like.

As the binding agent contained in the negative electrode mixture layer, there may be used, as in the case of the positive electrode 11, fluororesin, PAN, polyimide resin, acrylic resin, polyolefin resin, or the like, though styrene-butadiene rubber (SBR) or its modification product is preferably used. For example, the negative electrode mixture layer may contain, in addition to SBR or the like, CMC or its salt, polyacrylic acid (PAA) or its salt, polyvinyl alcohol, or the like.

As the separators 13, a porous sheet with ion permeability and an insulating property is used. Specific examples of the porous sheet may include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

In the examples shown in FIGS. 1 and 2, the positive electrode lead 20 is electrically connected to an intermediate portion such as a central portion of the positive electrode core in a winding direction, and the negative electrode lead 21 is electrically connected to a winding terminal end portion of the negative electrode core in the winding direction. However, the negative electrode lead may be electrically connected to a winding start end portion of the negative electrode core in the winding direction. Alternatively, the electrode assembly may include two negative electrode leads so that one negative electrode lead is electrically connected to the winding start end portion of the negative electrode core in the winding direction, while the other negative electrode lead is electrically connected to the winding terminal end portion of the negative electrode core in the winding direction. Alternatively, the negative electrode lead may be electrically connected to the winding start end portion of the negative electrode core in the winding direction, and the winding terminal side end portion of the negative electrode core in the winding direction may be made to come into contact with the inner surface of the outer can. Alternatively, the negative electrode lead may not exist, and the negative electrode and the outer can may be electrically connected by making the winding terminal side end portion of the negative electrode core to come into contact with the inner surface of the outer can.

As shown in FIG. 1, the cylindrical battery 10 further includes an insulating plate 18 arranged above the electrode assembly 14 and an insulating plate 19 arranged below the electrode assembly 14. The insulating plates 18 and 19 are constituted of a material having an insulating property, for example, resin or the like. In the example shown in FIG. 1, the positive electrode lead 20 attached to the positive electrode 11 extends toward the sealing assembly 17 through a through-hole of the insulating plate 18, and the negative electrode lead 21 attached to the negative electrode 12 extends toward the bottom portion 68 of the outer can 16 along the outside of the insulating plate 19. The positive electrode lead 20 is joined to the lower surface of a terminal plate 23 that is a bottom plate of the sealing assembly 17 by welding or other processing, and a sealing plate 27, which is a top plate of the sealing assembly 17 electrically connected to the terminal plate 23, serves as a positive electrode terminal. The negative electrode lead 21 is connected to the inner surface of the bottom portion 68 of the outer can 16 by welding or other processing, so that the outer can 16 serves as a negative electrode terminal.

The outer can 16 is a metallic container in a bottomed cylindrical shape. As a gap between the outer can 16 and the sealing assembly 17 is sealed by an annular gasket 28, the inner space of the cylindrical battery 10 is sealed. The gasket 28 includes a held portion 32 held by the outer can 16 and the sealing assembly 17 to insulate the sealing assembly 17 against the outer can 16. The gasket 28 functions as a sealing material to maintain the inside of the battery airtight and also functions as an insulating material to prevent a short circuit between the outer can 16 and the sealing assembly 17.

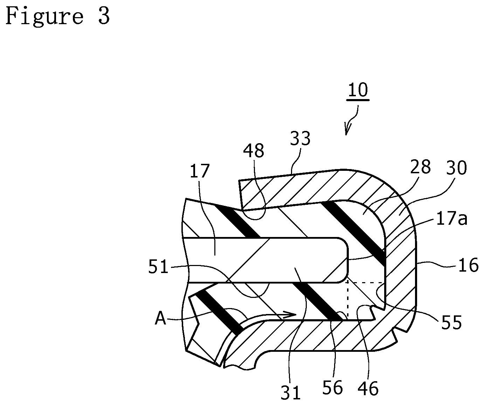

The outer can 16 includes a side wall portion 30 and a bottom portion 68. The side wall portion 30 constitutes a part of the outer can 16 excluding the bottom portion 68, and a shoulder portion 33 and a grooved portion 35 or the like are formed on the side wall portion 30. The grooved portion 35 is provided annularly in a part of an upper part of the cylindrical outer circumferential surface in the axial direction. The shoulder portion 33 extends inward in the radial direction from an end portion of the side wall portion 30 on the side of the opening portion. FIG. 3 is an expanded sectional view in the vicinity of the shoulder portion 33 in FIG. 1. As shown in FIG. 3, the outer can 16 includes an annular protrusion 46 in contact with the gasket 28 in a range on the inner side relative to a distal end 48 of the inner surface of the side wall portion 30 on the side of the opening portion. In the present disclosure, the inner surface of the side wall portion 30 in the direction from the distal end 48 toward the bottom portion 68 is defined as the inner side of the inner surface of the side wall portion 30. The protrusion 46 is provided at a corner portion (curved portion) in the vicinity of the upper end of the grooved portion 35 on the inner surface of the outer can 16. Specifically, on the inner surface of the outer can 16, the protrusion 46 is located on the inner side relative to a first place 55, which radially overlaps an end surface 51 of a circumferential edge portion 31 of the sealing assembly 17 on the side of the electrode assembly 14 in the axial direction. The circumferential edge portion 31 of the sealing assembly 17 is a part held by the gasket 28. On the inner surface of the outer can 16, the protrusion 46 is located on the outer side relative to a second place 56, which overlaps an outer circumferential end 17a of the sealing assembly 17 in the radial direction on the side of the electrode assembly 14 in the axial direction.

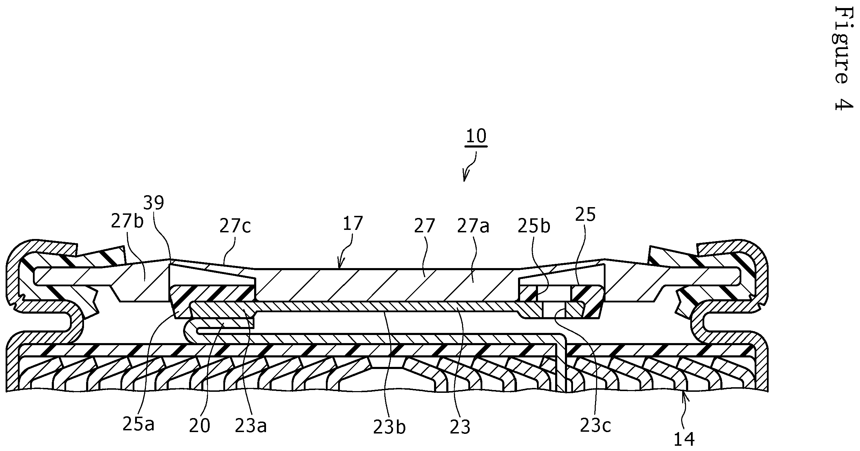

FIG. 4 is an expanded sectional view in the vicinity of the sealing assembly of the cylindrical battery 10. As shown in FIG. 4, the sealing assembly 17 has a structure formed by stacking, in order from the side of the electrode assembly 14, the terminal plate 23, an annular insulating plate 25, and the sealing plate 27. Each member constituting the sealing assembly 17 has a disc shape or a ring shape, and each member except the insulating plate 25 is electrically connected to each other. The terminal plate 23, which constitutes the bottom plate of the sealing assembly 17, has a circular upper surface located substantially on the same plane. The terminal plate 23 includes an annular thick portion 23a located on the outer side in the radial direction, and a disc-shaped thin portion 23b connected to an annular end portion of the thick portion 23a on the radially inward side, the disc-shaped thin portion 23b being thinner than the thick portion 23a. The positive electrode lead 20 is connected to the lower surface of the thick portion 23a of the terminal plate 23 by welding or other processing.

The sealing plate 27, which is in a circular shape in plan view, includes a central portion 27a, an outer circumferential portion 27b, and an inclination portion 27c connecting the central portion 27a and the outer circumferential portion 27b. The upper surface of the thin portion 23b of the terminal plate 23 and the lower surface of the central portion 27a of the sealing plate 27 are joined by metallurgical joining, e.g., laser welding. The inclination portion 27c is thinner than the central portion 27a. An annular upper surface of the inclination portion 27c is an inclined surface located at a higher position toward the outer side in the radial direction, and an annular lower surface of the inclination portion 27c is also an inclined surface located at a higher position toward the outer side in the radial direction. The thickness of the inclination portion 27c is smaller toward the outer side in the radial direction.

The insulating plate 25 is, for example, press fitted into the inner circumferential face of the outer circumferential portion 27b, and is fixed thereto. The insulating plate 25 includes an annular protruding portion 25a folded downward in a height direction on the outer circumferential side in the radial direction, and the thick portion 23a of the terminal plate 23 is, for example, press fitted into the inner circumferential face of the annular protruding portion 25a, and is fixed thereto. The insulating plate 25 is constituted of resin or the like having an insulating property to prevent electrical connection between the thick portion 23a of the terminal plate 23 and the sealing plate 27. The insulating plate 25 includes one or more vent holes 25b that penetrate in the axial direction at places axially overlapping the inclination portion 27c of the sealing plate 27, and the terminal plate 23 includes one or more vent holes 23c that penetrate in the axial direction at places axially overlapping the inclination portion 27c, the one or more vent holes 23c communicating with the vent holes 25b.

When the cylindrical battery 10 generates abnormal heat, and the internal pressure of the cylindrical battery 10 reaches a prescribed value, the central portion 27a and the inclination portion 27c of the sealing plate 27 are inverted upward, with an annular end portion 39 in the inclination portion 27c as a fulcrum, the annular end portion 39 being on the outer side in the radial direction and having low rigidity. At the same time as the inverting, the thin portion 23b of the terminal plate 23 breaks, and the part connected to the sealing plate 27 is detached from the terminal plate 23 or a welded portion between the terminal plate 23 and the sealing plate 27 is separated. This operation interrupts a current path between the terminal plate 23 and the sealing plate 27.

When the internal pressure increases further, the annular end portion 39 of the inclination portion 27c (see FIG. 3) breaks, and the gas inside the battery is discharged to the outside from a broken part of the sealing plate 27 through the vent holes 23c and 25b. This can prevent the rupture of the battery even when the internal pressure of the cylindrical battery 10 rises, and suppress the impact on the equipment mounted on the cylindrical battery 10, so that enhanced safety can be achieved. The terminal plate 23 constitutes a safety valve, and the inclination portion 27c of the sealing plate constitutes a break portion that discharges the internal gas to the outside by breaking.

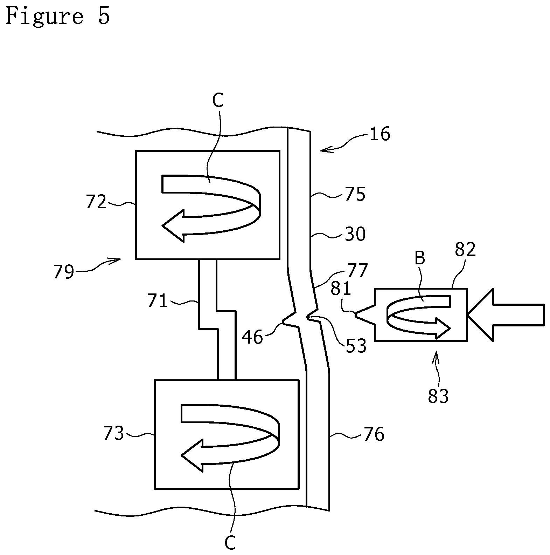

FIG. 5 is an explanatory view about one example of a formation method of the annular protrusion 46. First, a small diameter cylindrical portion 75, which is slightly smaller in diameter than other parts, is formed at an upper side end portion of the side wall portion 30 of the outer can 16 that houses the electrode assembly 14. Next, as shown in FIG. 5, a retaining mold 79, which includes two rollers 72 and 73 that are turnably attached to a shaft member 71, is housed inside the outer can 16.

Then, while a pressing mold 83 including a roller 82 is being turned in the direction of arrow B, a protruding portion 81 at an outer circumferential portion of the roller 82 is pressed from the outside onto a conical outer circumference surface of a tapered annular portion 77 that is present between the small diameter cylindrical portion 75 and a large diameter cylindrical portion 76 of the outer can 16. With this pressing, the two rollers 72 and 73, which are turnable in a free state, retain the outer can 16 from the inside and rotates in arrow C direction opposite to the arrow B direction in synchronization with the outer can 16. This spinning plastically deforms a part of the side wall portion 30 of the outer can 16 inward in the radial direction and forms the annular protrusion 46 on the inner surface of the outer can 16. This formation method generates an annular groove 53 on the outer surface of the outer can 16, concurrently with the formation of the protrusion 46.

After that, the grooved portion 35 is formed on the outer can 16. The grooved portion 35 is formed by recessing a part of the side wall portion 30 of the outer can 16 inward in the radial direction by spinning performed in a radially inward direction. The shoulder portion 33 is formed when the upper end portion of the outer can 16 is caulked to the circumferential edge portion 31 of the sealing assembly 17 after the sealing assembly 17 is joined to the positive electrode lead 20. The sealing assembly 17 is held between the shoulder portion 33 and the grooved portion 35 through the gasket 28 and fixed to the outer can 16 by the caulking. At this time, at least part of the gasket 28 is compressed between the outer can 16 and the sealing assembly 17.

As shown in FIG. 3, the gasket 28 has a high compression ratio at the place in contact with the protrusion 46. Therefore, a moving path of the electrolyte solution between the outer can 16 and the gasket 28 as shown by arrow A is blocked by the protrusion 46. In this way, liquid leakage and the rust on the outer can 16 caused by liquid leakage can be suppressed effectively.

Note that the present disclosure is not limited to the embodiment and its modifications disclosed, and various improvements and changes are possible without departing from the scope of the claims of the present application and any equivalents thereof.

For example, in the above embodiment, the case where the annular protrusion 46 is provided at a corner portion (curved portion) in the vicinity of the upper end of the grooved portion on the inner surface of the outer can 16 has been described. However, the annular protrusion may be provided at any place that is on the inner side relative to the distal end of the inner surface of the outer can and that comes into contact with the gasket.

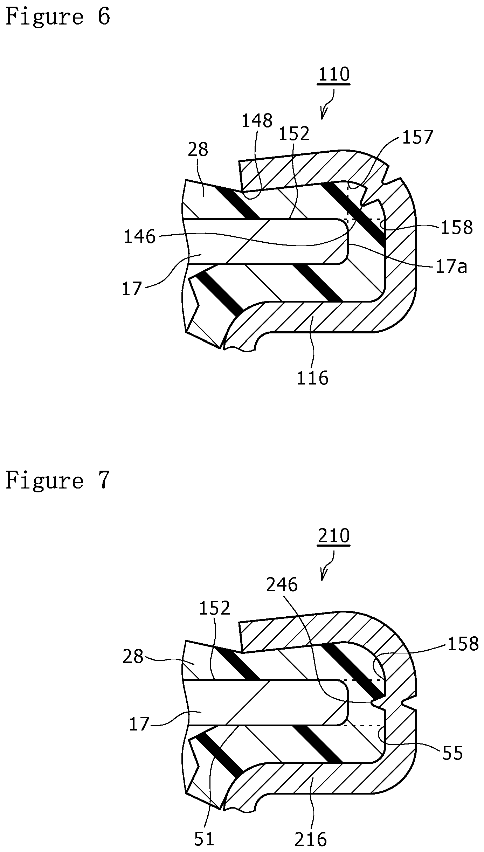

Specifically, as shown in FIG. 6, that is, an expanded sectional view of a cylindrical battery 110 of a first modification corresponding to FIG. 3, on the inner surface of an outer can 116, an annular protrusion 146 may be provided at a corner portion (curved portion) on the outer circumferential side of the shoulder portion. Specifically, on the inner surface of the outer can 116, the annular protrusion 146 may be provided on the inner side relative to a third place 157, which overlaps the outer circumferential end of the sealing assembly 17 in the radial direction on the side of the distal end 148 (upper side in the axial direction) in the axial direction. On the inner surface of the outer can 116, the annular protrusion 146 may also be provided on the outer side relative to a fourth place 158, which radially overlaps an axially upper end surface 152 of the circumferential edge portion of the sealing assembly 17.

Alternatively, as shown in FIG. 7, that is, an expanded sectional view of a cylindrical battery 210 of a second modification corresponding to FIG. 3, on the inner surface of an outer can 216, an annular protrusion 246 may also be provided on the inner side relative to the fourth place 158, which radially overlaps the axially upper end surface 152 of the circumferential edge portion of the sealing assembly 17. On the inner surface of the outer can 216, the annular protrusion 246 may also be provided on the outer side relative to the first place 55, which radially overlaps an axially lower end surface 51 of the circumferential edge portion of the sealing assembly 17.

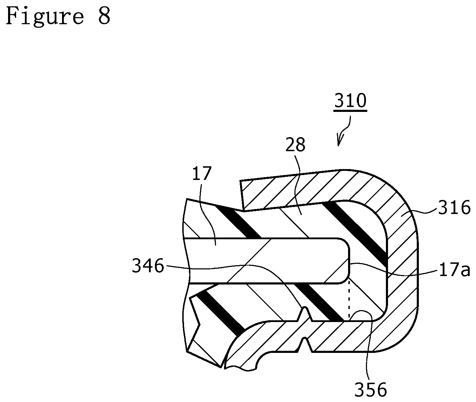

Alternatively, as shown in FIG. 8, that is, an expanded sectional view of a cylindrical battery 310 of a third modification corresponding to FIG. 3, on the inner surface of an outer can 316, an annular protrusion 346 may also be provided on the inner side relative to a second place 356, which overlaps the outer circumferential end 17a of the sealing assembly 17 in the radial direction on a lower side in the axial direction.

As shown in FIGS. 3 and 8, the annular protrusions 46 and 346 are preferably provided at positions adjacent to the electrode assembly 14 on the inner surface of the outer cans 16 and 316. As a result, a moving path of the electrolyte solution between the outer cans 16 and 316 and the gasket 28 can be blocked on the side of the electrode assembly 14. At the corner portions, a gap tends to be generated between the gasket and the outer can. Therefore, as shown in FIGS. 3 and 6, the protrusions 46 and 146 provided at the corner portions can effectively block the moving path of the electrolyte solution to the outside and effectively suppress liquid leakage or the like.

In the above embodiment, the case of forming the annular protrusion 46 by spinning has been described. However, the annular protrusion may be formed by any method, and may be fabricated by, for example, increasing the thickness of the inner circumferential surface at a prescribed axial position over the entire circumference in the bottomed cylindrical outer can before processing.

In the above embodiment, the case where the safety valve is provided at the upper end portion of the sealing assembly 17 has been described. However, a cap including a protruding portion protruding upward in the axial direction at the central portion in the radial direction may be provided on the upper end portion of the sealing assembly. Moreover, the case where the sealing assembly 17 constitutes the positive electrode terminal and the outer can 16 constitutes the negative electrode terminal has been described. However, the sealing assembly may constitute the negative electrode terminal and the outer can may constitute the positive electrode terminal.

### REFERENCE SIGNS LIST

10, 110, 210, 310 Cylindrical battery, 11 Positive electrode, 12 Negative electrode, 13 Separator, 14 Electrode assembly, 16, 116, 216, 316 Outer can, 17 Sealing assembly, 17a Outer circumferential end, 18, 19, 25 Insulating plate, 19 Insulating plate, 20 Positive electrode lead, 21 Negative electrode lead, 23 Terminal plate, 23a Thick portion, 23b Thin portion, 23c Vent hole, 25a Annular protruding portion, 25b Vent hole, 27 Sealing plate, 27a Central portion, 27b Outer circumferential portion, 27c Inclination portion, 28 Gasket, 30 Side wall portion, 31 Circumferential edge portion, 32 Held portion, 33 Shoulder portion, 35 Grooved portion, 39 Annular end portion, 46, 146, 246, 346 Annular protrusion, 48, 148 Distal end of inner surface of outer can, 51 Axially lower end surface of sealing assembly, 53 Annular groove, 55 First place, 56, 356 Second place, 68 Bottom portion, 71 Shaft member, 72, 73, 82 Roller, 75 Small diameter cylindrical portion, 76 Large diameter cylindrical portion, 77 Tapered annular portion, 79 Retaining mold, 81 Protruding portion, 83 Pressing mold, 152 End surface of sealing assembly, 157 Third place, 158 Fourth place.

## Claims

1. A cylindrical battery, comprising:
an electrode assembly;
an electrolyte solution;
a bottomed cylindrical outer can that houses the electrode assembly and the electrolyte solution; and
a sealing assembly that is caulked and fixed to an opening portion of the outer can through a gasket, wherein
when an area of an inner surface of a side wall portion of the outer can excluding a bottom portion on a side of the bottom portion is defined as an inner side, the outer can includes an annular protrusion in contact with the gasket in a range on the inner side relative to a distal end of the inner surface on a side of the opening portion.

2. The cylindrical battery according to claim 1, wherein
on the inner surface, the annular protrusion is located on the inner side relative to a place overlapping an outer circumferential end of the sealing assembly in a radial direction on a side of the distal end in an axial direction.

3. The cylindrical battery according to claim 2, wherein
on the inner surface, the annular protrusion is located on the inner side relative to a place radially overlapping an end surface of a circumferential edge portion of the sealing assembly on a side of the electrode assembly in the axial direction.

4. The cylindrical battery according to claim 3, wherein
on the inner surface, the annular protrusion is located on an outer side relative to a place overlapping the outer circumferential end on the side of the electrode assembly in the axial direction.
